# EUROPÄISCHE PATENTSCHRIFT

(11) **EP 1 099 703 B1**
(45) Veröffentlichungstag und Bekanntmachung des Hinweises auf die Patenterteilung: **11.08.2004**
(21) Anmeldenummer: 00120642.4
(22) Anmeldetag: 21.09.2000
(51) Int. Cl.: C07F 7/18

(54) **Verfahren zur Herstellung von Alkoxysilanen**
Process for preparing alkoxysilanes
Procédé de préparation d'alkoxysilanes

(30) Priorität: 13.11.1999 DE 19954635
(43) Veröffentlichungstag der Anmeldung: 16.05.2001
(73) Patentinhaber: Degussa AG, 40474 Düsseldorf (DE)
(72) Erfinder: Monkiewicz, Jaroslaw, Dr., 79618 Rheinfelden (DE); Laven, Ralf, Dr., 60439 Frankfurt (DE); Horn, Michael, Dr., 79618 Rheinfelden (DE); Löwenberg, Peter, 79618 Rheinfelden (DE); Schlosser, Thomas, Dr., 79594 Inzlingen (DE)

(56) Entgegenhaltungen:
- EP-A- 0 282 846

## Beschreibung

Die vorliegende Erfindung betrifft ein Verfahren zur Herstellung von Alkoxysilanen.

Alkoxysilane und Alkoxysilan-basierende Zusammensetzungen werden in vielen Bereichen angewendet: Als Haftvermittler, Vernetzer in Polymeren, als Trennmittel, als Zusatzstoffe in Farben und Lacken, für die Hydrophobierung von Oberflächen, u. a. für Textilien, Leder und insbesondere für den Schutz von Bauten und Fassaden, für die Buchkonservierung, für die besondere Modifizierung der Eigenschaften von Oberflächen, wie die Beschichtung von Glasfasern oder die Silanisierung von Füllstoffen und Pigmenten, aber auch für die Verbesserung der rheologischen Eigenschaften von Polymerdispersionen und Emulsionen, um nur einige Beispiele zu nennen.

Für die Herstellung von Alkoxysilanen setzt man in der Regel Halogensilane, insbesondere Chlorsilane, ein. Die Umsetzung eines Halogensilans mit einem Alkohol unter Erhalt eines Alkoxysilans ist dem Fachmann an sich bekannt und wird auch als Veresterung bezeichnet. Beispielsweise erhält man durch Umsetzung eines Chlorpropylmethyldichlorsilans mit Methanol ein Chlorpropylmethyldimethoxysilan unter Freisetzung von Chlorwasserstoff. Auch nach destillativer Reinigung des Produkts können Resthalogengehalte, d. h. Restmengen an saurem bzw. hydrolysierbarem Chlorid im Alkoxysilan verbleiben.

Heutzutage ist man bestrebt, Alkoxysilane und Produkte, die Alkoxysilane enthalten, sowie Alkoxysilan-basierende Zusammensetzungen mit möglichst geringen Halogenidgehalten herzustellen. Insbesondere werden Produkte mit einem möglichst niedrigen Chloridgehalt gewünscht. Ein weiteres Qualitätsmerkmal ist die Farbe, angestrebt werden möglichst niedrige Gardner/APHA-Farbzahlen nach ISO 6271.

Die besagte Umsetzung eines Halogensilans mit einem Alkohol wird entweder diskontinuierlich oder kontinuierlich durchgeführt, wobei der entstehende Halogenwasserstoff in die Gasphase überführt wird oder in der flüssigen Phase gebunden bleibt. Übliche Techniken zum Abtrennen des Halogenwasserstoffs durch Überführen in die Gasphase sind Strippen und Destillation einschließlich Reaktivdestillation. Solche Verfahren sind u. a. in DE-OS 20 61 189 und US 4 298 753, DE-OS 28 00 017, DE-OS 24 09 731, DE-OS 27 44 726, DE-OS 32 36 628, DE-OS 862 895 und DD 31 751 beschrieben. Wesentliche Nachteile dieser Verfahren zur Abtrennung von Halogenwasserstoff durch Überführung in die Gasphase sind die Folgereaktionen des Halogenwasserstoffs mit den erzeugten Alkoxysilanen zu Siloxanen nach der Reaktionsgleichung 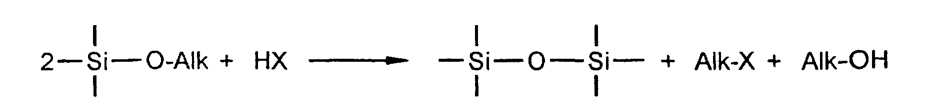 sowie die Limitierung des Umsatzes der Halogensilane zu Alkoxysilanen durch das thermodynamische Gleichgewicht infolge der Anwesenheit des Halogenwasserstoffs in der Reaktionsmischung. Dies gilt besonders dann, wenn mehr als ein Halogenatom gegen einen Alkoxyrest ausgetauscht werden soll. In diesem Fall liegen nicht alkoxylierte, einfach und mehrfach alkoxylierte Silane nebeneinander vor. Bei der Umsetzung von Trihalogensilanen mit Alkohol nehmen die Gleichgewichtskonstanten von der ersten bis zur dritten Stufe hin ab. Das heißt, daß besonders die dritte Alkoxygruppe schwierig einzuführen ist bzw. daß eingeführte dritte Alkoxygruppen leicht mit Halogenwasserstoff unter Rückbildung einer Halogensilanstruktur reagieren.

Ein begehrtes Alkoxysilan ist das 3-Chlorpropyl-methyl-dimethoxysilan (CPMDMO), das aus 3-Chlorpropyl-methyl-dichlorsilan und Methanol entsteht. Auch hier ist das Reaktionsprodukt der ersten Stufe, das Monoalkoxychlorsilan, gegenüber dem Dialkoxysilan begünstigt. Dies zeigt ein Vergleich der Gleichgewichtskonstanten, die für die erste Stufe bei Raumtemperatur deutlich größer als 1 ist, für die zweite Stufe jedoch nur 0,4 beträgt. Nach dem Stand der Technik wird die Umsetzung diskontinuierlich im Rührkesselreaktor durchgeführt, und der entstehende Halogenwasserstoff wird aus dem Reaktionsgemisch durch Destillation abgetrennt. Die Ausbeute beträgt etwa 60 %. Sie kann durch Zugabe von methanolischer Natriummethylatlösung auf 65 % gesteigert werden, allerdings mit dem Nachteil, daß Natriumchlorid anfällt, und der Gefahr, daß aus der 3-Chlorpropylgruppe in einer Williamson-Synthese eine 3-Methoxypropylgruppe wird.

Die genannten Nachteile der Verfahren, bei denen der gebildete Halogenwasserstoff in die Gasphase überführt wird, treten deshalb besonders gravierend auf, weil der Übergang des Halogenwasserstoffs aus der flüssigen Phase in die Gasphase relativ langsam erfolgt und somit der Stofftransport des Halogenwasserstoffs den Gesamtprozeß maßgeblich bestimmt. Das Gleichgewicht verschiebt sich also nur vergleichsweise langsam zugunsten der erwünschten alkoxylierten Produkte, und der Halogenwasserstoff fördert entsprechend der obigen Reaktionsgleichung die Entstehung von Siloxanen. Der Halogenwasserstoff geht besonders langsam bei Umsetzungen mit Methanol in die Gasphase über, da er in Methanol gut löslich ist. Infolge des langsamen Übergangs des Halogenwasserstoffs in die Gasphase sind die Ausbeuten an Alkoxysilan vermindert.

Eine weitere, bereits im Zusammenhang mit der Synthese von 3-Chlorpropyl-methyl-dimethoxysilan erwähnte Technik zur Abtrennung des entstandenen Halogenwasserstoffs aus der Reaktionsmischung ist dessen Bindung in der flüssigen Phase durch Umsetzung mit basischen Stoffen. Werden säurebindende Mittel eingesetzt, z. B. Ammoniak oder (tertiäre) Amine (DE-OS 913 769, in der die Abtrennung von Chlorwasserstoff mit Ammoniak beschrieben wird) oder Alkoholate, so fallen jedoch stöchiometrische Mengen Salz an, die vom Produkt meist mit viel Aufwand abgetrennt werden müssen.

Der Einsatz von Lösemitteln bei der Abtrennung des Halogenwasserstoffs ist ebenfalls beschrieben. Dabei dienen die Lösemittel dazu, die Viskosität der stets einphasigen Reaktionsmischung zu verringern (DE-OS 20 61 189) oder den Siedepunkt der stets einphasigen Reaktionsmischung herabzusetzen (DE-OS 28 00 017, DE-OS 32 36 628).

Dagegen ist bekannt, daß es vorteilhaft ist, bei der Umsetzung des Halogensilans mit dem Alkohol eine Reaktionstemperatur < 100°C zu wählen, damit unerwünschte Nebenreaktionen zu Siloxanen vermieden werden (DE-OS 24 09 731). Dies erfordert eine Abtrennung von Halogenwasserstoff aus möglichst niedrigem Temperaturniveau, obwohl für diese Abtrennung höhere Temperaturen günstiger wären.

Zur Herstellung von Alkoxysilanen wird der Einsatz verschiedener Reaktoren beschrieben, nämlich von Rührkesseln (z. B. GB 674 137), Rohrreaktoren (DE-OS 20 33 373), von Rührkesseln mit Kolonne (z. B. DE-OS 32 36 628) und von Reaktions-Destillations-Kolonnen (z. B. US 4 298 753).

Verfahren zur Entfernung von Resthalogengehalt aus Alkoxysilanen durch Umsetzung bzw. Neutralisation mit Alkalialkoholaten, wie z. B. Natriummethanolat, und Abtrennen von dabei entstandenem Salz sind auch aus EP 0 282 846 A2 und EP 0 741 137 A1 bekannt. Solche Neutralisationsverfahren weisen den Nachteil auf, daß bei dieser Umsetzung auch beachtliche Mengen Produkt zersetzt werden. Nebenprodukte sind u. a. Siloxane, Tetraalkoxysilan, Anlagerungsprodukte, wie Methoxyethyltrimethoxysilane durch Reaktion von Natriummethanolat und Vinyltrimethoxysilan, Methoxypropyltrimethoxysilane gebildet aus Natriummethanolat und Chlorpropyltrimethoxysilan, Methoxypropylmethyldimethoxysilane aus Natriummethanolat und Chlorpropylmethyldimethoxysilan, oder im Falle einer Reaktion von Alkalimethanolat und einem Alkyltrimethoxysilan auch das hoch toxische Tetramethoxysilan.

Ferner ist bei der Anwendung gängiger Neutralisationsmittel, wie Alkalialkoholaten, oft auch eine Verschlechterung der Farbzahl des behandelten Alkoxysilans zu beobachten.

In den Schriften CN 11 07 85 1A und 11 07 85 2A sind Verfahren zur Herstellung von Vinyltriethoxysilan und Chlorpropyltrimethoxysilan beschrieben, die durch Einsatz von Magnesiumalkoholaten sehr reine Produkte liefern sollen. Hierbei ist es von Nachteil, daß diese Alkoholate als sehr feuchtigkeitsempfindliche Produkte schwierig zu handhaben sind. Darüber hinaus liegen Magnesiumalkoholate in Pulverform vor und neigen zum Verklumpen, was wiederum die exakte Dosierung dieses Stoffes erschwert. Dieser Nachteil betrifft im besonderen die in der Praxis üblicherweise durchgeführte Dosierung in erwärmte oder heiße Produkte, weil das Silan oder andere flüchtige Bestandteile der Reaktionszubereitung auf den Magnesiumalkoholaten kondensieren, diese anlösen und damit in eine nicht mehr rieselfähige Form überführen.

Zur Vermeidung dieses Nachteils wurde versucht, alkoholische Lösungen der besagten Erdalkalialkoholate einzusetzen. Dies ist jedoch mit dem Problem behaftet, daß beachtliche Mengen Alkohol in diesen Neutralisationsschritt eingeschleust werden und unter Einsatz von Zeit und Energie wieder destillativ abgetrennt werden müssen. Zudem sind die Magnesiumalkoholate hochpreisig und in technischen Mengen nur bedingt verfügbar.

Die noch nicht veröffentlichte deutsche Patentanmeldung 198 49 196.4 offenbart ein Verfahren zur Neutralisation und Minderung des Resthalogengehalts in Alkoxysilanen oder in Alkoxysilan-basierenden Zusammensetzungen, wobei ein Alkoxysilan, das einen Restgehalt an acidem Halogenid aufweist, in Gegenwart eines Alkohols mit metallischem Magnesium nachträglich behandelt wird. Solche zusätzlichen Maßnahmen zur Nachbehandlung von Produkten sind in der Regel aufwendig und bedingen zusätzliche Kosten. Darüber hinaus wird bei der Umsetzung von Chlorsilanen mit Alkohol gefunden, daß der Alkohol mit freigesetztem Chlorwasserstoff reagiert und bei fortschreitender Veresterung Siloxane gebildet werden. Auch bei einer erhöhten Chlorwasserstoff-Löslichkeit im System ist ein hoher Siloxangehalt zu verzeichnen. Diese vor dem abschließenden Neutralisationsschritt stattfindenden Nebenreaktionen lassen sich bisher nur schwer kontrollieren und führen aufgrund der geringen Selektivität zu mäßigen Ausbeuten.

Der vorliegenden Erfindung lag nun die Aufgabe zugrunde, ein Verfahren bereitzustellen, das es ermöglicht, Alkoxysilane noch effektiver herzustellen. Ein zusätzliches Anliegen der vorliegenden Erfindung war es, Alkoxysilane mit einem möglichst geringen Gehalt an Resthalogen zu erhalten.

Die gestellte Aufgabe wird erfindungsgemäß entsprechend den Angaben der Patentansprüche gelöst.

Überraschenderweise wurde gefunden, daß in Anwesenheit von metallischem Magnesium eine direkte Umsetzung von Chlorsilan mit Alkohol zu Alkoxysilan erfolgt, wobei in vorteilhafter Weise der bei der Veresterung entstehende und in Lösung verbleibende Chlorwasserstoff durch eine parallel laufende "insitu"-Neutralisation unter Bildung von Magnesiumchlorid gebunden wird, und daß die an sich bekannten und zu erwartenden Nebenreaktionen bzw. Nebenprodukte nicht zu beobachten waren.

Überraschenderweise ist auch eine besonders produktschonende Wirkung der erfindungsgemäßen Umsetzung festzustellen, die selbst unter drastischen Bedingungen, wie erhöhte Temperaturen, großem Überschuß an Alkohol und langen Reaktionszeiten, noch hohe Umsatzraten ermöglicht.

So ist überraschend, daß sich bei der erfindungsgemäßen Umsetzung von Chlorsilan und Alkohol für das resultierende Alkoxysilan in der Regel ein optimales und produktschonendes Gleichgewicht einstellt und dabei eine sehr niedrige Konzentration an Chlorwasserstoff im Rohprodukt erreicht wird. Auch im weiteren Verlauf der Veresterung wird im allgemeinen keine Nebenproduktbildung beobachtet. Man kann davon ausgehen, daß die direkte Neutralisation von Chlorwasserstoff beim vorliegenden Verfahren automatisch dann einsetzt, wenn sich das Gleichgewicht der Reaktion zu Ungunsten des Produkts verschieben will.

Die nach dem Veresterungs-/Neutralisationsschritt im Rohprodukt noch vorhandenen Feststoffanteile, d. h. dabei entstandenes Magnesiumchlorid und eventuell im Überschuß vorliegendes, nicht abreagiertes metallisches Magnesium können in einfacher Weise, vorzugsweise durch Filtration, abgetrennt werden. Dabei werden in vorteilhafter Weise Produkte erhalten, deren Gehalte an Hochsiedern und Resthalogen, insbesondere Restchloridgehalte, gering sind. Unter halogenarmen Produkten bzw. Alkoxysilanen mit niedrigen Halogengehalten sind im allgemeinen solche zu verstehen, deren Halogengehalt < 1 000 Gew.-ppm beträgt. Insbesondere kann es sich bei den besagten Halogeniden um sogenannte hydrolysierbare, d. h. acide Chlorverbindungen, wie z. B. Chlorwasserstoff, Chlorsilane, Chloralkoxysilane einschließlich organofunktioneller Chlor- sowie Chloralkoxysilane handeln.

Ein Überschuß an Alkohol im Produkt stört im allgemeinen nicht, kann aber, sofern beim vorliegenden Verfahren gewünscht, vor bzw. nach der Abtrennung der Feststoffe destillativ entfernt werden. Die Destillation kann unter Normaldruck oder vermindertem Druck durchgeführt werden.

Darüber hinaus wird bei Anwendung des vorliegenden Verfahrens in ebenfalls vorteilhafter und überraschender Weise beobachtet, daß die Farbzahl erfindungsgemäß hergestellter Alkoxysilane gegenüber der Farbzahl marktgängiger Produkte, welche aufwendiger hergestellt werden, in der Regel nicht verschlechtert ist.

Nicht zuletzt ist das erfindungsgemäße Verfahren vorteilhaft, da es die Möglichkeit bietet, Alkoxysilane mit niedrigen Resthalogengehalten in einem sogenannten "Eintopfverfahren" effizient herzustellen, ohne daß im Vergleich zu herkömmlichen Veresterungsverfahren noch ein zusätzliches Verfahren zur Neutralisation von acidem Chlorid durchzuführen wäre.

Auch ist das vorliegende Verfahren vorteilhaft, da auf kommerziell ausreichend verfügbare und vergleichsweise kostengünstige Einsatzstoffe zurückgegriffen werden kann.

Somit kann ein besonders einfaches, wirtschaftliches und umweltfreundliches Verfahren zur Herstellung und gleichzeitigen Neutralisation von Alkoxysilanen mit niedrigen Gehalten an Resthalogen bereitgestellt werden.

Gegenstand der vorliegenden Erfindung ist somit ein Verfahren zur Herstellung von Alkoxysilanen, das dadurch gekennzeichnet ist, daß man mindestens ein Halogensilan mit mindestens einem Alkohol in Gegenwart von metallischem Magnesium umsetzt und anschließend das Alkoxysilan aus dem Rohprodukt gewinnt.

Im allgemeinen führt man das erfindungsgemäße Verfahren als sogenannte "Eintopfreaktion" durch, wobei man Halogensilan und Magnesium zusammengibt, dieses Gemisch unter Rühren erwärmt und den Alkohol zugibt.

In der Regel wird Alkohol im Überschuß eingesetzt. Während der erfindungsgemäßen Umsetzung wird das Alkoxysilan aus dem Chlorsilan und dem eingesetzten Alkohol gebildet. Dabei anfallender Chlorwasserstoff entweicht, erst im Laufe der Reaktion entsteht ein Alkohol-Überschuß, worin sich Chlorwasserstoff löst und praktisch gleichzeitig, d. h. "in situ" gebunden wird und in der Regel als festes Magnesiumchlorid anfällt.

Das vorliegende Verfahren wird insbesondere unter Normaldruck oder vermindertem Druck durchgeführt, beispielsweise > 0,02 bar abs. Man kann das Verfahren aber auch unter erhöhtem Druck durchführen, beispielsweise < 10 bar abs. Bevorzugt führt man die erfindungsgemäße Umsetzung bei einem Druck von 0,8 bis 1,3 bar abs. durch.

Auch arbeitet man in der Regel unter Ausschluß von Wasser. Geeigneterweise führt man die Umsetzung unter Schutzgasabdeckung durch, beispielsweise unter Stickstoff. Nach Beendigung der Umsetzung kann man den im Rohprodukt vorliegenden Feststoffanteil abtrennen. Der gegebenenfalls noch vorhandene Alkoholanteil kann - sofern erforderlichdestillativ entfernt werden. Man kann das Reinprodukt aber auch durch Destillation direkt aus dem erfindungsgemäß erhaltenen Rohprodukt gewinnen. Erfindungsgemäß erhaltene Alkoxysilane weisen im allgemeinen sehr niedrige Resthalogenwerte bei gleichzeitig hoher Produktselektivität auf.

Vorzugsweise setzt man beim erfindungsgemäßen Verfahren ein Chlorsilan ein. Man kann aber auch ein Gemisch aus Chlorsilanen einsetzen. Ferner kann man Fluorsilane, Bromsilane sowie Jodsilane einsetzen.

Beispielsweise - aber nicht ausschließlich - setzt man beim erfindungsgemäßen Verfahren folgende Chlorsilane ein: Vinyltrichlorsilan, 3-Chlorpropyltrichlorsilan, 3-Chlorpropyl-methyldichlorsilan, n-Propyltrichlorsilan, i-Propyltrichlorsilan, n-Propyl-methyldichlorsilan, Trimethylchlorsilan, Dimethyldichlorsilan, Methyltrichlorsilan, Ethyltrichlorsilan, n-Butyltrichlorsilan, i-Butyltrichlorsilan, i-Butyl-methyldichlorsilan, n-Octyltrichlorsilan, Hexadecyltrichlorsilan, Cyclohexyl-methyldichlorsilan, Dicyclopentyldichlorsilan, 3-Methacryloxypropyltrichlorsilan sowie Fluoralkyl- bzw. Perfluoralkyltrichlorsilane, wie 3,3,4,4,5,5,6,6,7,7,8,8,8tridecafluor-1,1,2,2-tetrahydrooctyltrichlorsilan, 3,3,4,4,5,5,6,6,7,7,8,8,9,9,10,10,10-Heptadecafluor-1,1,2,2-tetrahydrodecyltrichlorsilan, um nur einige zu nennen.

Beim erfindungsgemäßen Verfahren können beispielsweise handelsübliche Magnesiumspäne eingesetzt werden, z. B. von der Firma Eckart Non Ferrum (St. Georgen/A) vom Typ"MF 15" oder "Almamet 150". Geeigneterweise setzt man Magnesiumpulver oder -späne ein, wobei die durchschnittliche Teilchengröße vorzugsweise 20 µm bis 15 mm, besonders vorzugsweise 50 µm bis 10 mm, ganz besonders vorzugsweise 100 µm bis 1 mm, beträgt. Geeignet sind allerdings auch andere Magnesiumvarianten, z. B. Barren oder Band.

Die einzusetzende Menge an Magnesium errechnet sich im allgemeinen aus dem bei konventionellen Verfahren zu erwartenden Chloridgehalten des Rohprodukts, wobei bevorzugt ein Überschuß an Metall eingesetzt wird. Vorzugsweise wählt man die Menge an Magnesium so, daß nach der Umsetzung geeigneterweise ein pH-Wert im Basischen eingehalten werden kann, vorzugsweise pH 10 bis 14.

Vorteilhaft ist in der Regel die Dosierung von Alkohol im Überschuß, vorzugsweise in einer Menge, die gerade ausreichend ist, überschüssiges Magnesium in einem angemessenen Zeitraum zu Magnesiumalkoholat umzusetzen.

Geeigneterweise beträgt der Überschuß an Alkohol, bezogen auf das umzusetzende Halogensilan, zwischen 0,001 und 500 Mol-%, vorzugsweise zwischen 10 und 400 Mol-%, ganz besonders bevorzugt zwischen 20 und 200 Mol-%.

Beim erfindungsgemäßen Verfahren kann man, je nach dem gewünschten Veresterungsprodukt, insbesondere - aber nicht ausschließlich - Methanol, Ethanol, n-Propanol, i-Propanol, Methoxyethanol, n-Butanol oder i- bzw. sek.-Butanol als Alkohol einsetzen.

Bevorzugt führt man beim erfindungsgemäßen Verfahren die Umsetzung in einem Temperaturbereich von 0 bis 200 °C, vorzugsweise von 10 bis 160 °C, besonders vorzugsweise zwischen 20°C und dem Siedepunkt des entsprechenden Chlorsilans bzw. Alkoxysilans, durch.

In der Regel dauert die erfindungsgemäße Umsetzung zwischen 5 Minuten und 48 Stunden. Vorzugsweise führt man die Umsetzung beim erfindungsgemäßen Verfahren zwischen 10 Minuten und 24 Stunden durch, besonders vorzugsweise von 15 Minuten bis 12 Stunden, wobei eine gute Durchmischung ebenfalls von Vorteil sein kann.

Zur Gewinnung des gewünschten Produkts trennt man den Feststoffanteil in geeigneter Weise vom erfindungsgemäß erhaltenen Rohprodukt ab, beispielsweise bei der Herstellung von Chlorpropyl-methyldimethoxysilan. Die Abtrennung der Feststoffe erfolgt bevorzugt durch Filtration. Man kann die Feststoffe aber auch durch Zentrifugieren abtrennen. Das so erhaltene Produkt kann darüber hinaus einer gesonderten Destillation unterzogen werden. Man kann das gewünschte Produkt aber auch durch Destillation des erfindungsgemäßen, feststoffhaltigen Rohprodukts gewinnen, wobei man bevorzugt unter vermindertem Druck destilliert.

Das erfindungsgemäße Verfahren kann man beispielsweise - aber nicht ausschließlich - zur Herstellung folgender Alkoxysilane anwenden: Vinyltrimethoxysilan, Vinyltriethoxysilan, Vinyl-tris(2-methoxyethoxy)silan, 3-Chlorpropyltrimethoxysilan, 3-Chlorpropyltriethoxysilan, 3-Chlorpropyl-methyldiethoxysilan, 3-Chlorpropyl-methyldiethoxysilan, 3-Propyltrimethoxysilan, n-Propyltriethoxysilan, n-Propyl-methyldimethoxysilan, n-Propyl-methyldiethoxysilan, Trimethylmethoxysilan, Trimethylethoxysilan, Dimethyldimethoxysilan, Dimethyldiethoxysilan, Methyltrimethoxysilan, Methyltriethoxysilan, Ethyltrimethoxysilan, Ethyltriethoxysilan, i-Butyltrimethoxysilan, i-Butyltriethoxysilan, Hexadecyltrimethoxysilan, Hexadecyltriethoxysilan, Cyclohexyl-methyldimethoxysilan, Cyclohexyl-methyldiethoxysilan, Dicyclopentyldimethoxysilan, Dicyclopentyldiethoxysilan, 3-Methacryloxypropyltrimethoxysilan, 3-Methacryloxypropyltriethoxysilan, sowie Perfluoralkyl- bzw. Fluoralkylfunktionelle Alkoxysilane, wie 3,3,4,4,5,5,6,6,7,7,8,8,8-Tridecafluor-1,1,2,2-tetrahydrooctyltrimethoxysilan, 3,3,4,4,5,5,6,6,7,7,8,8,8-Tridecafluor-1,1,2,2-tetrahydrooctyltriethoxysilan, 3,3,4,4,5,5,6,6,7,7,8,8,98,9,10,10,10-Heptadecafluor-1,1,2,2-tetrahydrodecyltrimethoxysilan, 3,3,4,4,5,5,6,6,7,7,8,8,9,9,-10,10,10-Heptadecafluor-1,1,2,2-tetrahydrodecyltriethoxysilan.

Das erfindungsgemäße Verfahren ermöglicht in vorteilhafter Weise, - da einfach, wirtschaftlich und umweltgerecht -, die Herstellung von halogenarmen Alkoxysilanen, d. h. solche mit einem Resthalogenidgehalt, insbesondere an acidem Chlorid, von < 1 000 Gew.-ppm, vorzugsweise von < 100 Gew.-ppm, besonders vorzugsweise von < 10 Gew.-ppm, insbesondere bis hin zur Nachweisgrenze, welche bei rd. ≤ 1 Gew.-ppm liegt.

In der Regel erzielt man beim erfindungsgemäßen Verfahren mindestens einen Gehalt an acidem Halogenid, der gegenüber herkömmlichen Systemen mit vergleichbarem Aufwand um mehr als 30 % niedriger liegt.

Ferner ermöglicht die Anwendung des erfindungsgemäßen Verfahrens in vorteilhafter und überraschender Weise auch die Bereitstellung von Produkten mit guten Farbzahlen.

Durch die nachfolgenden Beispiele wird die vorliegende Erfindung näher erläutert, ohne den beanspruchten Gegenstand zu beschränken.

### Beispiele:

### Vergleichsbeispiel A

1 440 g Chlorpropylmethyldichlorsilan werden vorgelegt und auf ca. 60 °C aufgeheizt. Nun werden 600 g Rückalkohol (Methanol aus vorhergehender Veresterung) zudosiert. Im Verlauf der Reaktion wird kontinuierlich auf ca. 120 °C aufgeheizt und entstehendes HCI-Gas ausgetrieben. Die Temperatur fällt dabei unter 100 °C. Dann werden 400g reines Methanol eindosiert. Gleichzeitig wird Methanol in die Rückalkoholvorlage abdestilliert. Die Dosiergeschwindigkeit ist mit 200 g/h über den gesamten Zeitraum konstant. Im so erhaltenen Rohprodukt wird ein Gehalt von 40 000 Gew.-ppm an hydrolysierbarem Chlorid und ein Gehalt an Hochsiedern von 11 % ermittelt. Nachdem der Ansatz auf unter 40 °C abgekühlt ist, wird das hydrolysierbare Chlorid mit 300 g einer 30%igen Natriummethylatlösung umgesetzt und das entstehende Salz abfiltriert. Die Destillation liefert 962 g (70 %) Chlorpropylmethyl-dimethoxysilan und 206 g Methanol. Im erhaltenen Destillat wird der Gehalt an hydrolysierbarem Chlorid von 1 150 Gew.-ppm ermittelt. Der schwarze Destillationsrückstand (ca. 380 g) enthält überwiegend Siloxane.

### Vergleichsbeispiel B

1 560 g Propyltrichlorsilan werden vorgelegt und auf ca. 60 °C aufgeheizt. Nun werden 600 g Rückalkohol (Methanol aus vorhergehender Veresterung) zudosiert. Im Verlaufe der Reaktion wird kontinuierlich auf ca. 120°C aufgeheizt und entstehendes HCI Gas ausgetrieben. Die Temperatur fällt jetzt auf unter 100°C. Dann werden 1 000 g reines Methanol eindosiert. Gleichzeitig wird Methanol in die Rückalkoholvorlage abdestilliert. Die Dosiergeschwindigkeit ist mit 200 g/h über den gesamten Zeitraum gleichbleibend. Im so erhaltenen Rohprodukt wird ein Gehalt von 55 000 Gew.-ppm an hydrolysierbarem Chlorid und ein Gehalt an Hochsiedern von 9 % ermittelt. Nachdem der Ansatz auf unter 40 °C abgekühlt ist, wird das hydrolysierbare Chlorid mit 400 g einer 30%igen Natriummethylatlösung umgesetzt und das Salz abfiltriert. Die Destillation liefert 1 083g (75%) Propyltrimethoxysilan und 311 g Methanol. Im erhaltenen Destillat wird der Gehalt an hydrolysierbarem Chlorid von 255 Gew.-ppm ermittelt. Der Destillationsrückstand von ca. 355 g enthält überwiegend Siloxane.

### Vergleichsbeispiel C

1 440 g Propylmethyldichlorsilan werden vorgelegt und auf ca. 60 °C aufgeheizt. Nun werden 600 g Rückalkohol (Ethanol aus vorhergehender Veresterung) zudosiert. Im Verlaufe der Reaktion wird kontinuierlich auf ca. 120 °C aufgeheizt und entstehendes HCI-Gas ausgetrieben. Die Temperatur fällt jetzt auf unter 100°C. Dann werden 900 g reines Ethanol eindosiert. Gleichzeitig wird Ethanol in die Rückalkoholvorlage abdestilliert. Die Dosiergeschwindigkeit ist mit 290 g/h über den gesamten Zeitraum gleichbleibend. Im so erhaltenen Rohprodukt wird ein Gehalt von 23 000 Gew.-ppm an hydrolysierbarem Chlorid und ein Gehalt an Hochsiedern von 9 % ermittelt. Nachdem der Ansatz auf unter 40 °C abgekühlt ist, wird das hydrolysierbare Chlorid mit 350g einer 21 %igen Natriumethylatlösung umgesetzt und das Salz abfiltriert. Die Destillation liefert 1 195g (74 %) Propylmethyldiethoxysilan und 326 g Ethanol. Im erhaltenen Destillat wird der Gehalt an hydrolysierbarem Chlorid von 557 Gew.-ppm ermittelt. Der Destillationsrückstand von ca. 408 g enthält überwiegend Siloxane.

### Vergleichsbeispiel D

1 440 g Hexadecyltrichlorsilan werden vorgelegt und auf ca. 60 °C aufgeheizt. Nun werden 350 g Rückalkohol (Methanol aus vorhergehender Veresterung) zudosiert. Im Verlaufe der Reaktion wird kontinuierlich auf ca. 120 °C aufgeheizt und entstehendes HCI-Gas ausgetrieben. Die Temperatur fällt jetzt auf unter 100 °C. Dann werden 400 g reines Methanol eindosiert. Gleichzeitig wird Methanol in die Rückalkoholvorlage abdestilliert. Die Dosiergeschwindigkeit ist mit 200 g/h über den gesamten Zeitraum gleichbleibend. Im so erhaltenen Rohprodukt wird ein Gehalt von 70 000 Gew.-ppm an hydrolysierbarem Chlorid und ein Gehalt an Hochsiedern von 42 % ermittelt. Nachdem der Ansatz auf unter 40 °C abgekühlt ist, wird das hydrolysierbare Chlorid mit 500 g einer 30%igen Natriummethylatlösung umgesetzt und das Salz abfiltriert. Die Destillation liefert 776 g (56 %) Hexadecyltrimethoxysilan und 372 g Methanol. Im erhaltenen Destillat wird der Gehalt an hydrolysierbarem Chlorid von 342 Gew.-ppm ermittelt. Der Destillationsrückstand von ca. 593 g enthält überwiegend Siloxane.

### Beispiel 1

2 400 g Chlorpropylmethyldichlorsilan und 66 g Magnesiumspäne werden vorgelegt und auf ca. 60 °C aufgeheizt. Nun wird Methanol über 3 Stunden mit einer Dosierleistung von 200 g/h und darüber hinaus mit 400 g/h zudosiert. Im Verlaufe der Reaktion wird kontinuierlich auf ca. 140°C aufgeheizt und entstehendes HCI-Gas abgeführt. Die Temperatur fällt nach ca. 3 Stunden auf unter 100 °C. Unter Freisetzung von Wasserstoff wird erst jetzt Magnesium zu Magnesiumchlorid umgesetzt. Nach Zugabe von insgesamt 1 500 g Methanol und einer Stunde Nachreaktion wird der Ansatz abgekühlt und filtriert. Das Rohprodukt weist einen Gehalt an Hochsiedern von 2% auf sowie einen pH-Wert von 14. Die Destillation liefert 2 130 g (93 %) Chlorpropylmethyldimethoxysilan und 228 g Methanol. Im erhaltenen Destillat wird der Gehalt an hydrolysierbarem Chlorid von 80 Gew.-ppm ermittelt. Der gelbliche Destillationsrückstand von ca. 124 g enthält überwiegend Bis-(3-Chlorpropyl-methylmethoxy)disiloxan.

### Beispiel 2

2 400 g Chlorpropyltrichlorsilan und 25 g Magnesiumspäne werden vorgelegt und auf ca. 60 °C aufgeheizt. Nun wird Methanol über 5 Stunden mit einer Dosierleistung von 200 g/h und darüber hinaus mit 400 g/h zudosiert. Im Verlauf der Reaktion wird kontinuierlich auf ca. 140 °C aufgeheizt und entstehendes HCI-Gas abgeführt. Die Temperatur fällt nach ca. 5 Stunden auf unter 100 °C. Nach einer Zugabe von insgesamt 1 600 g Methanol und einer Stunde Nachreaktion werden 550 g Methanol abdestilliert. Das Rohprodukt hat einen Gehalt an Hochsiedern von 3 % und einen pH-Wert von 14. Es wird nun mit dem geringen Salzanteil in die Destillation überführt. Die Destillation liefert 2 181 g (97%) Chlorpropyltrimethoxysilan und 30 g Methanol. Im erhaltenen Destillat wird der Gehalt an hydrolysierbarem Chlorid von 55 Gew.-ppm ermittelt. Der gelbliche Destillationsrückstand enthält ca. 67 g Bis-(3-Chlorpropyl-dimethoxy)disiloxan und ca. 100 g Magnesiumchlorid.

## Patentansprüche

1. Verfahren zur Herstellung von Alkoxysilanen,
**dadurch gekennzeichnet,**
**daß** man mindestens ein Halogensilan mit mindestens einem Alkohol in Gegenwart von metallischem Magnesium umsetzt und anschließend das Alkoxysilan aus dem Rohprodukt gewinnt.

2. Verfahren nach Anspruch 1,
**dadurch gekennzeichnet,**
**daß** man ein Chlorsilan einsetzt.

3. Verfahren nach Anspruch 1 oder 2,
**dadurch gekennzeichnet,**
**daß** man Methanol, Ethanol, Propanol, Methoxyethanol oder Butanol einsetzt.

4. Verfahren nach einem der Ansprüche 1 bis 3,
**dadurch gekennzeichnet,**
**daß** man die Alkoholkomponente im Überschuß einsetzt.

5. Verfahren nach einem der Ansprüche 1 bis 4,
**dadurch gekennzeichnet,**
**daß** man Magnesiumspäne oder -pulver einsetzt.

6. Verfahren nach einem der Ansprüche 1 bis 5,
**dadurch gekennzeichnet,**
**daß** man die Umsetzung bei einer Temperatur von 0 bis 200°C durchführt.

7. Verfahren nach einem der Ansprüche 1 bis 6,
**dadurch gekennzeichnet,**
**daß** man die Umsetzung bei einem Druck von 0,8 bis 1,3 bar abs. durchführt.

8. Verfahren nach einem der Ansprüche 1 bis 7,
**dadurch gekennzeichnet,**
**daß** man die Umsetzung für die Dauer von 5 Minuten bis 48 Stunden durchführt.

9. Verfahren nach einem der Ansprüche 1 bis 8,
**dadurch gekennzeichnet,**
**daß** man die im Rohprodukt vorliegenden Feststoffe durch Filtrieren abtrennt.

10. Verfahren nach einem der Ansprüche 1 bis 9,
**dadurch gekennzeichnet,**
**daß** man das von Feststoffen befreite Alkoxysilan destilliert.

11. Verfahren nach einem der Ansprüche 1 bis 8,
**dadurch gekennzeichnet,**
**daß** man das Alkoxysilan durch Destillation aus einem feststoffhaltigen Rohprodukt gewinnt.

## Claims

1. A process for the preparation of alkoxysilanes,
**characterized in that** it comprises
reacting at least one halogenosilane with at least one alcohol in the presence of metallic magnesium and then isolating the alkoxysilane from the crude product.

2. A process according to claim 1,
**characterized in that**
a chlorosilane is employed.

3. A process according to claim 1 or 2,
**characterized in that**
methanol, ethanol, propanol, methoxyethanol or butanol is employed.

4. A process according to any one of claims 1 to 3,
**characterized in that**
the alcohol component is employed in excess.

5. A process according to any one of claims 1 to 4,
**characterized in that**
magnesium turnings or powder are employed.

6. A process according to any one of claims 1 to 5,
**characterized in that**
the reaction is carried out at a temperature of 0 to 200°C.

7. A process according to any one of claims 1 to 6,
**characterized in that**
the reaction is carried out under a pressure of 0.8 to 1.3 bar absolute.

8. A process according to any one of claims 1 to 7,
**characterized in that**
the reaction is carried out for a duration of 5 minutes to 48 hours.

9. A process according to any one of claims 1 to 8,
**characterized in that**
the solids present in the crude product are separated off by filtration.

10. A process according to any one of claims 1 to 9,
**characterized in that**
the alkoxysilane freed from solids is distilled.

11. A process according to any one of claims 1 to 8,
**characterized in that**
the alkoxysilane is isolated by distillation from a solids-containing crude product.

## Revendications

1. Procédé pour la fabrication d'alkoxysilanes,
**caractérisé en ce qu'**
on convertit au moins un halogénosilane avec au moins un alcool en présence de magnésium métallique, et **en ce qu'**on obtient l'alkoxysilane à partir du produit brut.

2. Procédé selon la revendication 1,
**caractérisé en ce qu'**
on utilise du chlorosilane.

3. Procédé selon la revendication 1 ou 2,
**caractérisé en ce qu'**
on utilise le méthanol, l'éthanol, le propanol, le méthoxyéthanol ou le butanol.

4. Procédé selon l'une quelconque des revendications 1 à 3,
**caractérisé en ce qu'**
on convertit les composants d'alcool en surplus.

5. Procédé selon l'une quelconque des revendications 1 à 4,
**caractérisé en ce qu'**
on utilise de la poudre ou des paillettes de magnésium.

6. Procédé selon l'une quelconque des revendications 1 à 5,
**caractérisé en ce qu'**
on réalise la conversion à une température allant de 0 à 200°C.

7. Procédé selon l'une quelconque des revendications 1 à 6,
**caractérisé en ce qu'**
on réalise la conversion à une pression de 0,8 à 1,3 bar absolu.

8. Procédé selon l'une quelconque des revendications 1 à 7,
**caractérisé en ce qu'**
on réalise la conversion pour une durée de 5 minutes à 48 heures.

9. Procédé selon l'une quelconque des revendications 1 à 8,
**caractérisé en ce qu'**
on sépare les matières solides présentes dans le produit brut par filtration.

10. Procédé selon l'une quelconque des revendications 1 à 9,
**caractérisé en ce qu'**
on distille l'alkoxysilane libéré des matières solides.

11. Procédé selon l'une quelconque des revendications 1 à 8,
**caractérisé en ce qu'**
on obtient l'alkoxysilane par distillation à partir d'un produit brut contenant les matières solides.
